# EUROPEAN PATENT SPECIFICATION

(11) **EP 1 274 774 B1**
(45) Date of publication and mention of the grant of the patent: **08.11.2006**
(21) Application number: 01927966.0
(22) Date of filing: 11.04.2001
(51) Int. Cl.: C08J 3/24, C09D 7/12

(54) **METHOD FOR THE MANUFACTURE OF PASTES FOR AUTOMATIC ADJUSTMENT OF THE CURING PROPERTIES OF UNSATURATED POLYESTER BASED GEL COATS AND THE USE OF SUCH PASTES**
VERFAHREN ZUR HERSTELLUNG VON PASTEN ZUR AUTOMATISCHEN EINSTELLUNG DER HÄRTUNGSEIGENSCHAFTEN VON GELBESCHICHTUNGEN AUF BASIS UNGESÄTTIGTER POLYESTER SOWIE VERWENDUNG SOLCHER PASTEN
PROCEDE DE FABRICATION DE PATES POUR REGULATION AUTOMATIQUE DES PROPRIETES DE DURCISSEMENT DE REVETEMENTS GELATINEUX A BASE DE POLYESTER INSATURE, ET UTILISATION DE CES PATES

(30) Priority: 14.04.2000 FI 20000895
(43) Date of publication of application: 15.01.2003
(73) Proprietor: Ashland Inc., Covington, Kentucky 41012-0391 (US)
(72) Inventor: FÄRM, Outi, FIN-00250 Helsinki (FI); RATIA, Heikki, FIN-02200 Espoo (FI); SJÖBERG, Tuomo, FIN-00240 Helsinki (FI); JÄRVENTAUSTA, Aki, FIN-15150 Lahti (FI); BLOMQVIST, Tuula, FIN-07500 Askola (FI)
(74) Representative: Vossius & Partner
(86) International application number: PCT/FI2001/000362
(87) International publication number: WO 2001/079333

(56) References cited:
- WO-A1-00/23495
- US-A- 5 998 532
- US-A- 6 063 864

## Description

The invention relates to a method for the manufacture and to the use of autoadjustment pastes, which are suitable for the production of unsaturated polyester based gel coats and top coats/enamels, and particularly suitable for the production of automatically coloured unsaturated polyester based gel coats and top coats/enamels and for the adjustment of their curing properties.

Pigment pastes, tinting technology and tinting machines are widely used in paint industry for the manufacture of coloured paints and coatings. Coloured unsaturated polyester based gel coats are manufactured by dispensing colour pastes or colourants into base gel coats. The colouring or tinting of unsaturated polyester based gel coats is conventionally performed in open mixing vessels with manual tinting or in closed vessels using automatic tinting. The manual colouring operation is a lengthy process with several quality control and following adjustment steps and significant amounts of waste are formed. Emission of volatile organic compounds, such as styrene, during manual tinting of unsaturated polyester gel coats is a significant environmental and occupational safety hazard.

In the automatic tinting method, colour pastes are dispensed in a base gel coat and product pails are closed, mixed and stored to be sent to end-users without quality control or further adjustment steps and the curing properties of the obtained gel coats vary significantly. Different pigments are used in varying amounts in order to manufacture unsaturated polyester gel coats with different colours. Pigments or combinations thereof are known to inhibit the curing reaction of unsaturated polyester based gel coats, and curing properties of tinted unsaturated polyester gel coats, such as gel time, cannot be changed or adjusted in the conventional automatic tinting method.

In the light of the state of the art there clearly exists a need for a rapid, easy and repeatable method for adjusting the curing properties of tinted unsaturated polyester based gel coats and top coats/enamels according to individual requirements, independently of the colour or of the pigment used, and also a need for a method for automatic manufacture of unsaturated polyester based top coats/enamels containing paraffin.

US-A-5,998,532 relates to a color pigmented moisture curing polyurethane coating that has an adjustable drying time, as well as to methods of producing the coating.

US.A.6,063,864 describes a curable, unsaturated polyester composition comprising, by weight, an unsaturated polyester and 1-60% styrene and 1-50% vinylether monomers.

WO-A-00/23495 discloses unsaturated polyester resins with higher molecular weight, low viscosity and high solubility especially in reactive diluents.

The object of the invention is to provide a method for the manufacture of autoadjustment pastes, the use of such autoadjustment pastes and the use of a autoadjustment paste system in the production of coloured unsaturated polyester based gel coats and top coats/enamels and to provide a method for the manufacture of coloured unsaturated polyester based gel coats and top coats/enamels with adjusted curing properties.

Characteristic features of the method for the manufacture of autoadjustment pastes, of the use of autoadjustment pastes and autoadjustment paste systems in the production of coloured unsaturated polyester based gel coats and top coats/enamels and of the method for the manufacture of coloured unsaturated polyester based gel coats and top coats/enamels with adjusted curing properties are stated in the claims.

It has now been found that the disadvantages and problems of the state of the art, related to the colouring and tinting of unsaturated polyester based gel coats and top coats/enamels, can be avoided or significantly reduced by the solution according to the invention. According to the invention coloured and/or tinted unsaturated polyester based gel coats and top coats/enamels can be manufactured in a rapid, easy and repeatable manner with adjusted and predetermined curing properties from base gel coats, colour pastes and autoadjustment paste system. The base gel coat can be any suitable unsaturated polyester gel coat and the colour pastes can be any suitable colour pastes used in the colouring of gel coats.

The autoadjustment paste system comprises an accelerator paste (A), which promotes the curing reaction of a gel coat, an inhibitor paste (B), which inhibits the curing reaction of a gel coat, and a paraffin paste (C), which transforms the gel coat into a top coat/enamel by modifying its surface during drying and curing. Many organic pigments, such as phthalocyanine blue, are known to inhibit the curing reaction of unsaturated polyester based gel coats. According to the invention, one or more components selected from the group consisting of an accelerator paste (A), an inhibitor paste (B) and a paraffin paste (C) are dispensed in a controlled manner into the gel coat. By dispensing, in a controlled manner, the accelerator paste (A) and/or inhibitor paste (B) into the gel coat during the tinting process, it is possible to compensate for the delay in the curing caused by some of pigments and also to adjust the curing properties of the tinted gel coat or top coat/enamel, e.g. to achieve different gel times and film curing times according to the needs and requirements of the end-user.

The paraffin paste (C) can also be used without pastes (A) and (B), and by dispensing automatically the paraffin paste (C) during tinting, it is possible to easily produce coloured surface-modified top coats/enamels. The dispensing is performed automatically. The paraffin paste (C) can also be used as a semiproduct in conventional production of top coats/enamels and also in the production of LSE lamination resins to ease up the addition of paraffin wax, thus eliminating continuous melting and handling of the wax.

### Autoadjustment paste systems according to the invention are described in detail in the following.

According to the invention the autojustment paste system comprises an accelerator (A), an inhibitor paste (B) and a paraffin paste (C).

The accelerator paste (A) comprises 10-70 wt-%, preferably 40-60 wt-% of an accelerator or promotor (I) or a combination thereof, 21-88 wt-%, preferably 25-50 wt-% of a polyester polymer (II), preferably an unsaturated polyester polymer and particularly preferably a monomer-free unsaturated polyester polymer, optionally combined with a polar solvent (III) in a ratio of between 4:1 and 1:4, preferably between 3:1 and 1:3, and 1-9 wt-%, preferably 2-8 wt-% of a thixotropic agent known in the art and commonly used in unsaturated polyester based gel coats.

The inhibitor paste (B) comprises 1-50 wt-%, preferably 15-40 wt-% of an inhibitor (IV) or a combination of inhibitors, 38-95 wt-%, preferably 55-75 wt-% of a polar solvent (III), optionally combined with a polyester polymer (II), preferably an unsaturated polyester polymer and particularly preferably a monomer-free unsaturated polyester polymer, in a ratio of between 4:1 and 1:4, preferably between 3:1 and 1:3, and 1-12 wt-%, preferably 2-10 wt-% of a thixotropic agent known in the art and commonly used in unsaturated polyester based gel coats.

Paraffin paste (C) comprises 3-12 wt-%, preferably 5-10 wt-% of a paraffin wax (V), 81-94 wt-%, preferably 84-88 wt-% of a nonpolar solvent (VI), and 3-7 wt-%, preferably 4-6 wt-% of a thixotropic agent known in the art and commonly used in unsaturated polyester based gel coats.

Suitable thixotropic agents are hydrophilic and hydrophobic fumed silica, precipitated silica and clays. Same or different thixotropic agents may be used in accelerator paste (A), inhibitor paste (B) and paraffin paste (C).

Accelerators and promoters (I) can be those commonly known to promote the curing reaction of unsaturated polyester based gel coats, e.g. metals, such as potassium, and/or metal salts of organic acids, such as cobalt octoate, and/or amines, such as dimethylaniline, diethyaniline, and/or amides, such as dimethylacetoacetamide or diethylacetoacetamide and preferably dimethylacetoacetamide or diethylacetoacetamide.

Suitable polyester polymers (II) are low-viscosity polyester polymers, preferably unsaturated polyester polymers and particularly preferably monomer-free unsaturated polyester polymers, optionally terminated with monohydric alcohols. They are manufactured from raw materials known to a man skilled in the art; e.g. using 30-60 mol-%, preferably 35-55 mol-% of saturated and/or ethylenically unsaturated diacids and/or anhydrides, such as adipic acid or maleic anhydride, 20-50 mol-%, preferably 25-45 mol-%, of dihydric alcohols, such as propylene glycol and ethylene glycol, and optionally 20-50 mol-%, preferably 25-45 mol-%, of monohydric alcohols, such as benzyl alcohol and 2-ethylhexanol. Typical polyesters have a MW of 300-1500 g/mol, preferably 500-1000 g/mol, a Brookfield viscosity of 200-700 mPas, preferably 300-600 mPas (at 23 °C), and a cone & plate viscosity (ICI) of 200-600 mPas, preferably 300-500 mPas (23 °C).

Polar solvents (III) may be chosen among glycols such as propylene glycol and glycol ethers, such as methyl-, ethyl-, propyl- and butyl ethers of propylene glycol, dipropylene glycol and tripropylene glycol, esters, e.g. triethyl phosphate, and other typical solvents used for diluting of unsaturated polyester resin systems, e.g. styrene and its derivatives, methacrylates and acrylates.

Inhibitors (IV) may be those commonly known to inhibit the curing reaction of unsaturated polyester based gel coat, e.g. hydroquinone derivatives, such as toluhydroquinone, hydroquinone monomethyl ether, mono*-tert*-butyl hydroquinone or 2,5-di-*tert*-butyl hydroquinone and a preferable one is toluhydroquinone.

Suitable paraffin waxes (V) include all hydrocarbon waxes commonly known to unsaturated polyester producers with long, hydrophobic chains containing 20-40 carbon atoms and having a melting point of 46-60 °C.

Nonpolar solvents (VI) which are able to dissolve the molten paraffin wax (V), include low- and medium-boiling hydrocarbon solvents obtained from oil refining processes, preferably aromatic-free and EHS approved solvents, such as white spirit.

All autoadjustment pastes may also contain fillers in an amount of 0.01 - 20 wt-%, grinding and dispersing aids, air release agents, thixotropy enhancers and other additives known in the art in an amount of 0.01 - 2 wt-%, for easing up the manufacturing and for improving stability of the pastes.

The accelerator paste (A) and the inhibitor paste (B) have a Brookfield viscosity of 200-10000 mPas, preferably 500-8000 mPas (at 23 °C), and a cone & plate viscosity (ICI) of 100-3000 mPas, preferably 200-2000 mPas (at 23 °C). The paraffin paste (C) has a Brookfield viscosity of 200-5000 mPas, preferably 500-4000 mPas (at 23 °C).

Autoadjustment pastes according to the invention have good feeding, pumping and dispensing properties in automatic tinting machines. They have an optimum viscosity and rheology and very good storage stability, up to 12 months and even more. The autoadjustment pastes either maintain their properties both at elevated and low temperatures, or they restore their properties after storage at such temperatures and they have no effect on the final colour of the tinted gel coat.

### The method for the manufacture and use of autoadjustment pastes is described in the following.

Autoadjustment pastes according to the invention are manufactured by diluting the active component (accelerator or promoter, inhibitor, paraffin wax) in the polyester polymer and/or solvent, followed by grinding the thixotropic agent into the solution to make a smooth and thick enough paste. Additional components, such as fillers, air release agents, thixotropy enhancers and other additives, can be incorporated prior to addition and grinding of the thixotropic agent or afterwards.

The accelerator paste (A) is manufactured by diluting the accelerator(s) (I) in the polyester polymer (II) or, optionally, in a mixture of polyester polymer (II) and polar solvent (III), in a ratio between 4:1 and 1:4, preferably between 3:1 and 1:3. The thixotropic agent is ground into the solution suitably by a dissolver.

The inhibitor paste (B) is manufactured by diluting the inhibitor(s) (IV) in a polar solvent (III) or, optionally, in a mixture of a polar solvent (III) and polyester polymer (II) in a ratio of between 4:1 and 1:4, preferably between 3:1 and 1:3. The thixotropic agent is ground into the solution suitably by a dissolver.

The paraffin paste (C) is manufactured by melting the paraffin wax (V) and diluting it in a nonpolar solvent (VI). The thixotropic agent is ground into the solution suitably by means of a mixer or a shaker.

Autoadjustment pastes can be used in automatic tinting machines. They are dispensed into gel coats automatically according to predetermined mathematical models which are stored in the tinting software. The mathematical models are based on the effects of autoadjustment pastes and colour pastes or colourants on the curing properties of base gel coats. The autoadjustment pastes can also be dispensed manually to the unsaturated polyester based gel coats.

According to the invention one or more components selected from the group consisting of an accelerator paste (A), an inhibitor paste (B) and a paraffin paste (C) are dispensed into a gel coat.

Accelerator paste (A) and an inhibitor paste (B) can be dispensed into an unsaturated polyester based gel coat in varying amounts depending on the concentrations of the active components, on the particular desired colour and on the desired curing properties of the final product. The accelerator paste (A) is dispensed in an amount of 0-7 wt-%, preferably 0-2 wt-% and particularly preferably 0.01-1.6 wt-%. The inhibitor paste (B) is dispensed in an amount of 0-4 wt-%, preferably 0-0.5 wt-% and particularly preferably 0.01-0.3 wt%. Accelerator pastes promote the curing i.e. decrease the gel time and film cure of the tinted gel coat and inhibitor pastes retard the curing i.e. increase the gel time and film cure. By dispensing colour or pigment pastes and the autoadjustment pastes either alone or as a combination, the tinted gel coat will have either always the same curing properties despite of the colour and pigment used or, if it is required, a different gel time and/or film cure.

Paraffin paste (C) is always dispensed in the same amount of 1.3-5.3 wt-%, preferably 1.6-3.2 wt-%, depending on the concentration of paraffin wax in the paste.

According to the invention it is now possible to easily, rapidly and reliably adjust the curing properties of a tinted or coloured unsaturated polyester based gel coat or top coat/enamel and to keep properties, such as gel time, always the same in each colour despite of different pigments, by dispensing the accelerator and/or inhibitor paste(s), preferably automatically into the gel coat during the tinting process. This also makes it possible to achieve different curing properties to the tinted gel coat, e.g. different gel times, according to individual requirements and needs. Additionally, at the same time it is now possible to produce surface-modified unsaturated polyester based top coats/enamels by dispensing the paraffin paste automatically into the gel coat during tinting. The autoadjustment and tinting process can be conveniently performed as a closed system without any hazardous emissions of volatile organic components, and the colouring and adjusting can be performed automatically without any additional mixing vessels or need for laborious washing of equipment. As a result much less waste and waste solvents are formed, no quality control is needed for the unsaturated polyester based gel coats or top coats/enamels manufactured by automatic tinting and autoadjustment, much less time is required for the process and significant saving of costs is achieved. Additionally the gel time and film curing can be varied exactly according to the requirements of the end-user, for example depending whether the application is to be performed by hand lay-up or spraying. The autoadjustment pastes and the autoadjustment paste system for adjusting curing properties, simultaneously with automatic tinting and colouring of unsaturated polyester gel coats and top coats/enamels is suitable for batch sizes of 1-1000 kg. This technology can be called automatic adjustment of gel coat end properties i.e. autoadjustment and the pastes can be named as autoadjustment pastes.

The invention is further illustrated by the following Examples.

### Example 1

### Accelerator paste A1

Accelerator paste (A1) was made by diluting 50 wt-% of diethylacetoacetamide in 47 wt-% of a monomer-free unsaturated polyester polymer (Leguval H1, Roskydal H1 (from Bayer) or Silmar S-889-80 (from Rhodamin)). The solution was made into a paste by grinding 3 wt-% of a hydrophilic silica by a dissolver.

### Example 2

### Accelerator paste A2

Accelerator paste (A2) was made by diluting 50 wt-% of diethylacetoacetamide in a mixture of 25 wt-% of a monomer-free unsaturated polyester polymer (Leguval H1, Roskydal H1 (from Bayer) or Silmar S-889-80 (from Rhodamin)) and 17.5 wt-% of propylene glycol monomethyl ether. The solution was made into a paste by grinding 7.5 wt-% of hydrophilic silica by a dissolver.

### Example 3

### Accelerator paste A3

Accelerator paste (A3) was made by diluting 50 wt-% of diethylacetoacetamide in a mixture of 32 wt-% of a monomer-free unsaturated polyester polymer (Leguval H1, Roskydal H1 (from Bayer) or Silmar S-889-80 (from Rhodamin)) and 15 wt-% of propylene glycol monomethyl ether. Prior to grinding, 0.5 wt-% of air release agent (BYK A 555) was incorporated. The solution was made into a paste by grinding 2 wt-% of hydrophilic silica by a dissolver after which 0.5 wt-% of thixotropy enhancer (BYK R 605) was added.

### Example 4

### Inhibitor paste B1

Inhibitor paste (B1) was made by diluting 20 wt-% of toluhydroquinone in 72 wt-% of propylene glycol monomethyl ether. The solution was made into a paste by grinding 8 wt-% of hydrophilic silica by a dissolver.

### Example 5

### Inhibitor paste B2

Inhibitor paste (B2) was made by diluting 20 wt-% of toluhydroquinone in a mixture of 56 wt-% of propylene glycol monomethyl ether and 18 wt-% of a monomer-free unsaturated polyester polymer (Leguval H1, Roskydal H1 (from Bayer) or Silmar S-889-80 (from Rhodamin)). The solution was made into a paste by grinding 6 wt-% of hydrophilic silica by a dissolver.

### Example 6

### Inhibitor paste B3

Inhibitor paste (B3) was made by diluting 20 wt-% of toluhydroquinone in a mixture of 57 wt-% of propylene glycol monomethyl ether and 20 wt-% of a monomer-free unsaturated polyester polymer (Leguval H1, Roskydal H1 (from Bayer) or Silmar S-889-80 (from Rhodamin)). Prior to grinding, 0.5 wt-% of air release agent (BYK A 555) was incorporated. The solution was made into a paste by grinding 2 wt-% of hydrophilic silica by a dissolver after which 0.5 wt-% of thixotropy enhancer (BYK R 605) was added.

### Example 7

### Paraffin paste C1

Paraffin paste (C1) was made by diluting 9.5 wt-% of molten paraffin wax in 85.5 wt-% of hydrocarbon solvent (white spirit). The solution was made into a paste by grinding 5 wt-% of hydrophilic silica by a mixer or a shaker.

### Example 8

### Top coat/enamel

A top coat/enamel was made by dispensing 1.7 wt-% of paraffin paste (C1) automatically into a tinted gel coat.

### Example 9

### Use of accelerator and inhibitor pastes

**Reference Test 1**: A typical conventional unsaturated polyester base gel coat had a gel time of 7.5 minutes and a film curing time of 75 minutes. The pigments (1), (2) and (3) inhibited the curing of this gel coat by increasing the curing times. Results are presented in following Table 1:

**Table 1**

| Base gel coat | Gel time (min) | Film curing time (min) |
|---|---|---|
| *No pigment* | 7.5 | 75 |
| 1 wt-% pigment (1) | 13 | 165 |
| 2 wt-% pigment (2) | 11 | 130 |
| 3.5 wt-% pigment (3) | 10 | 110 |

| | | |
|---|---|---|
| Pigment (1) = magenta red pigment Pigment (2) = phthalo blue pigment Pigment (3) = organic red pigment | | |

**Test 2**: By dispensing accelerator pastes (A1 or A2) into the samples presented in Test 1, the gel and film curing times changed significantly and the results are presented in Table 2.

**Table 2**

| Base gel coat | Accelerator paste A1 or A2* (wt-%) | Gel time (min) | Film curing time (min) |
|---|---|---|---|
| *no pigment* | 0.6 | 4 | 45 |
| 1 wt-% pigment (1) | 0.6 | 5.5 | 80 |
| 2 wt-% pigment (2) | 0.6 | 5 | 70 |
| 3.5wt-% pigment (3) | 0.6 | 4.5 | 60 |

| | | | |
|---|---|---|---|
| * = A1 and A2 have equal effects | | | |

**Test 3**: By dispensing inhibitor pastes (B1 or B2) into the samples in Test 2 (with accelerator pastes A1 or A2), the gel and film curing times changed significantly and the results are presented in Table 3.

**Table 3**

| Base gel coat | Inhibitor paste B1 or B2** (wt-%) | Gel time (min) | Film curing time (min) |
|---|---|---|---|
| *No pigment* | 0.15 | 17 | 65 |
| 1 wt-% pigment (1) | 0.15 | 32.5 | 165 |
| 2 wt-% pigment (2) | 0.15 | 21 | 90 |
| 3.5 wt-% pigment (3) | 0.15 | 24 | 130 |

| | | | |
|---|---|---|---|
| ** = B1 and B2 have equal effects | | | |

This approach can be used to adjust the curing properties of tinted gel coats, e.g. gel time, to be always the same in every colour despite of different pigments and also to produce different curing properties of tinted gel coats, e.g. different gel times, according to a customer's needs. The method can also be extended to complex colour formulas composed of many different pigments which have different effects on the curing of the gel coat. The accelerator and inhibitor pastes are dispensed into tinted gel coats automatically according to predetermined mathematical models which are stored in the tinting software.

### Example 10

### Use of accelerator and inhibitor pastes

Accelerator and inhibitor pastes can also be used to develop different gel times according to any specific and individual needs.

**Test 4:** A typical base gel coat had a gel time of 8.5 minutes and a film curing time of 75 minutes. By dispensing inhibitor pastes (B1 or B2), longer gel times could be produced, which can be seen in Table 4.

**Table 4**

| Base gel coat | Inhibitor paste B1 or B2 (wt-%) | Gel time (min) | Film curing time (min) |
|---|---|---|---|
| *normal gel coat* | - | 8.5 | 75 |
| Sample A | 0.02 | 12.5 | 90 |
| Sample B | 0.04 | 17.5 | 100 |

| | | | |
|---|---|---|---|
| ** = B1 and B2 have equal effects | | | |

**Test 5**: The samples from Test 4 have longer gel times but also longer film curing times. To achieve different gel times but yet to keep the film curing times as normal, both accelerator (A1 or A2) and inhibitor (B1 or B2) have to be dispensed. This can be seen in Table 5.

**Table 5**

| Base gel coat | Accelerator A1 or A2 (wt-%) | Inhibitor B1 or B2 (wt-%) | Gel time (min) | Film curing time (min) |
|---|---|---|---|---|
| *normal gel coat* | - | - | 8.5 | 75 |
| Sample C | 0.24 | 0.04 | 12.5 | 80 |
| Sample D | 0.57 | 0.09 | 17.5 | 80 |

| | | | | |
|---|---|---|---|---|
| * = A1 and A2 have equal effects ** = B 1 and B2 have equal effects | | | | |

This approach can also be extended to be used with colour formulas where different pigments have their own additional effects on the curing of gel coats.

## Claims

1. Paste system for the automatic adjustment of the curing properties of unsaturated polyester based gel coats and top coats/enamels, **characterized in that** the paste system comprises an accelerator paste (A), an inhibitor paste (B) and a paraffin paste (C), and
the accelerator paste (A) comprises 10-70 wt-% of an accelerator or a promoter (I) or a combination thereof, 21-88 wt-% of a polyester polymer (II) which is optionally combined with a polar solvent (III) in a ratio between 4:1 and 1:4 and 1-9 wt-% of a thixotropic agent;
the inhibitor paste (B) comprises 1-50 wt-% of an inhibitor (IV) or a combination thereof, 38-95 wt-% of a polar solvent (III), which is optionally combined with a polyester polymer (II) in a ratio between 4:1 and 1:4, and 1-12 wt-% of a thixotropic agent; and
the paraffin paste (C) comprises 3-12 wt-% of a paraffin wax (V), 81-94 wt% of a nonpolar solvent (VI) and 3-7 wt-% of a thixotropic agent.

2. Paste system according to claim 1, **characterized in that**
the accelerator paste (A) comprises 40-60 wt-% of an accelerator or a promoter (1) or a combination thereof, 25-50 wt-%.of a polyester polymer (II) which is optionally combined with a polar solvent (III) in a ratio between 3:1 and 1:3 and 2-8 wt-% of a thixotropic agent;
the inhibitor paste (B) comprises 15-40 wt-% of an inhibitor (IV) or a combination thereof, 55-75 wt-% of a polar solvent (III), which is optionally combined with a polyester polymer (II) in a ratio between 3:1 and 1:3, and 2-10 wt-% of a thixotropic agent; and
the paraffin paste (C) comprises 5-10 wt-% of a paraffin wax (V) 84-88 wt-% of a nonpolar solvent (VI) and 4-6 wt-% of a thixotropic agent.

3. Paste system according to claim 1 or 2, **characterized in that** the polyester polymer (III) is based on unsaturated and/or saturated diacids.

4. Paste system according to any one of claims 1-3, **characterized in that** the accelerator or promoter (I) is a metal, a metal salt of an organic acid, an amine or an amide, the polyester polymer (II) is a low-viscosity unsaturated polyester polymer, optionally terminated with a monohydric alcohol, the polar solvent (III) is a glycol or glycol ether or styrene or its derivative or methacrylate or acrylate or other solvent used for diluting of unsaturated polyester based gel coats, the paraffin wax (V) is selected from a group consisting of hydrocarbon waxes with hydrophobic chains containing 20-40 carbon atoms and having a melting point of 46-60 °C, the nonpolar solvent (VI) is a low or medium-boiling hydrocarbon solvent, the inhibitor (IV) is a hydroquinone derivative and the thixotropic agent is hydrophilic or hydrophobic fumed silica, precipitated silica or clay.

5. Paste system according to any one of claims 1-4, **characterized in that** the polyester polymer (II) is a monomer-free polyester polymer.

6. Paste system according to any one of claims 1-5, **characterized in that** the pastes (A), (B) and (C) additionally comprise fillers and/or grinding aids and/or dispersing aids and/or air release agents and/or thixotropy enhancers and/or other additives known in the art.

7. Use of a paste system according to any one of claims 1-6 in the manufacture of tinted and/or coloured unsaturated polyester based gel coats and top coats/enamels and surface-modified top coats/enamels, and for adjusting curing properties of unsaturated polyester based gel coats and top coats/enamels.

8. Method for the manufacture of tinted and/or coloured unsaturated polyester based gel coats and top coats/enamels, **characterized in that** colour pastes or colourants and one or more components selected from the group consisting of
an accelerator paste (A), which is manufactured by diluting 10-70 wt-% of an accelerator(s) (I) in 21-88 wt-% of a polyester polymer (II) or, optionally, in a mixture of polyester polymer (II) and polar solvent (III), in a ratio between 4:1 and 1:4 and then 1-9 wt-% of a thixotropic agent is ground into the solution,
an inhibitor paste (B), which is manufactured by diluting 1-50 wt-% of an inhibitor(s) (IV) in 38-95 wt-% of a polar solvent (III) or, optionally, in a mixture of a polar solvent (III) and a polyester polymer (II) in a ratio of between 4:1 and 1:4, and then 1-12 wt-% of a thixotropic agent is ground into the solution, and
a paraffin paste (C), which is manufactured by melting 3-12 wt-% of a paraffin wax (V) and diluting it in 81-94 wt-% of a nonpolar solvent (VI), and then 3-7 wt-% of a thixotropic agent is ground into the solution,
are dispensed automatically or manually to an unsaturated polyester based gel coat, and the amount of accelerator paste (A) is 0-7 wt-%, the amount of inhibitor paste (B) is 0-4 wt-% and the amount of paraffin paste (C) is 1.3-5.3 wt-%.

9. Method for the manufacture of tinted and/or coloured unsaturated polyester based gel coats and top coats/enamels according to claim 8, **characterized in that**
the accelerator paste (A) comprises 40-60 wt-% of an accelerator or a promoter (I) or a combination thereof, 25-50 wt-% of a polyester polymer (II) which is optionally combined with a polar solvent (III) in a ratio between 3:1 and 1:3 and 2-8 wt-% of a thixotropic agent;
the inhibitor paste (B) comprises 15-40 wt-% of an inhibitor (IV) or a combination thereof, 55-75 wt-% of a polar solvent (III), which is optionally combined with a polyester polymer (II) in a ratio between 3:1 and 1:3, and 2-10 wt-% of a thixotropic agent; and
the paraffin paste (C) comprises 5-10 wt-% of a paraffin wax (V), 84-88 wt-% of a nonpolar solvent (VI) and 4-6 wt-% of a thixotropic agent.

10. Method for the manufacture of tinted and/or coloured unsaturated polyester based gel coats and top coats/enamels according to claim 8 or 9, **characterized in that** the polyester polymer (II) is based on unsaturated and/or saturated diacids.

11. Method for the manufacture of tinted and/or coloured unsaturated polyester based gel coats and top coats/enamels according to any one of claims 8-10, **characterized in that** the accelerator or promoter (I) is a metal, a metal salt of an organic acid, an amine or an amide, the polyester polymer (II) is a low-viscosity unsaturated polyester polymer, optionally terminated with a monohydric alcohol, the polar solvent (III) is a glycol or glycol ether or styrene or its derivative or methacrylate or acrylate or other solvent used for diluting of unsaturated polyester based gel coats, the paraffin wax (V) is selected from a group consisting of hydrocarbon waxes with hydrophobic chains containing 20-40 carbon atoms and having a melting point of 46-60 °C, the nonpolar solvent (VI) is a low or medium-boiling hydrocarbon solvent, the inhibitor (IV) is a hydroquinone derivative and the thixotropic agent is hydrophilic or hydrophobic fumed silica, precipitated silica or clay.

12. Method for the manufacture of tinted and/or coloured unsaturated polyester based gel coats and top coats/enamels according to any one of claims 8-11, **characterized in that** the polyester polymer (II) is a monomer-free polyester polymer.

13. Method for the manufacture of tinted and/or coloured unsaturated polyester based gel coats and top coats/enamels according to any one of claims 8-12, **characterized in that** the amount of the accelerator paste (A) is 0-2 wt-%, the amount of the inhibitor paste (B) is 0-0.5 wt-% and the amount of paraffin paste (C) is 1.6-3.2 wt-%.

14. Method according to any one of claims 8-13 for the manufacture of top coats/enamels, **characterized in that** paraffin paste (C) is dispensed automatically to unsaturated polyester based gel coats during tinting and surface-modified top coats/enamels are obtained.

15. Method for the manufacture of tinted and/or coloured unsaturated polyester based gel coats and top coats/enamels according to any one of claims 8-14, **characterized in that** the pastes (A), (B) and (C) additionally comprise fillers and/or grinding aids and/or dispersing aids and/or air release agents and/or thixotropy enhancers and/or other additives known in the art.

16. Method for the manufacture of tinted and/or coloured unsaturated polyester based gel coats and top coats/enamels according to claim 13, **characterized in that** the amount of the accelerator paste (A) is 0.01-1.6 wt-% and the amount of the inhibitor paste (B) is 0.01-0.3 wt-%.

17. Method for the manufacture of tinted and/or coloured unsaturated polyester based gel coats and top coats/enamels according to any one of claims 8-16, **characterized in that** the dispensing of the pastes (A), (B) and (C) is performed automatically according to predetermined mathematical models stored in tinting software.

## Patentansprüche

1. Pastensystem zur automatischen Einstellung der Härtungseigenschaften von Gelbeschichtungen und Deckbeschichtungen/Emaillen auf Basis ungesättigter Polyester, **dadurch gekennzeichnet, dass** das Pastensystem eine Beschleunigerpaste (A), eine Inhibitorpaste (B) und eine Paraffinpaste (C) umfasst, und
die Beschleunigerpaste (A) 10 bis 70 Gew.-% eines Beschleunigers oder eines Promotors (I) oder einer Kombination davon, 21 bis 88 Gew.-% eines Polyesterpolymers (II), das gegebenenfalls mit einem polaren Lösungsmittel (III) in einem Verhältnis zwischen 4:1 und 1:4 kombiniert ist, und 1 bis 9 Gew.-% eines thixotropen Mittels umfasst;
die Inhibitorpaste (B) 1 bis 50 Gew.-% eines Inhibitors (IV) oder einer Kombination davon, 38 bis 95 Gew.-% eines polaren Lösungsmittels (III), das gegebenenfalls mit einem Polyesterpolymer (II) in einem Verhältnis zwischen 4:1 und 1:4 kombiniert ist, und 1 bis 12 Gew.-% eines thixotropen Mittels umfasst; und
die Paraffinpaste (C) 3 bis 12 Gew.-% eines Paraffinwachses (V), 81 bis 94 Gew.-% eines unpolaren Lösungsmittels (VI) und 3 bis 7 Gew.-% eines thixotropen Mittels umfasst.

2. Pastensystem nach Anspruch 1, **dadurch gekennzeichnet, dass**
die Beschleunigerpaste (A) 40 bis 60 Gew.-% eines Beschleunigers oder eines Promotors (I) oder einer Kombination davon, 25 bis 50 Gew.-% eines Polyesterpolymers (II), das gegebenenfalls mit einem polaren Lösungsmittel (III) in einem Verhältnis zwischen 3:1 und 1:3 kombiniert ist, und 2 bis 8 Gew.-% eines thixotropen Mittels umfasst;
die Inhibitorpaste (B) 15 bis 40 Gew.-% eines Inhibitors (IV) oder einer Kombination davon, 55 bis 75 Gew.-% eines polaren Lösungsmittels (III), das gegebenenfalls mit einem Polyesterpolymer (II) in einem Verhältnis zwischen 3:1 und 1:3 kombiniert ist, und 2 bis 10 Gew.-% eines thixotropen Mittels umfasst; und
die Paraffinpaste (C) 5 bis 10 Gew.-% eines Paraffinwachses (V), 84 bis 88 Gew.-% eines unpolaren Lösungsmittels (VI) und 4 bis 6 Gew.-% eines thixotropen Mittels umfasst.

3. Pastensystem nach Anspruch 1 oder 2, **dadurch gekennzeichnet, dass** das Polyesterpolymer (II) auf ungesättigten und/oder gesättigten Disäuren basiert.

4. Pastensystem nach einem der Ansprüche 1 bis 3, **dadurch gekennzeichnet, dass** der Beschleuniger oder Promotor (I) ein Metall, ein Metallsalz einer organischen Säure, ein Amin oder ein Amid ist, das Polyesterpolymer (II) ein ungesättigtes Polyesterpolymer niedriger Viskosität ist, das gegebenenfalls einen einwertigen Alkohol als endständige Gruppe aufweist, das polare Lösungsmittel (III) ein Glycol oder Glycolether oder Styrol oder Derivat davon oder Methacrylat oder Acrylat oder anderes Lösungsmittel, das zum Verdünnen von Gelbeschichtungen auf Basis ungesättigter Polyester verwendet wird, ist, das Paraffinwachs (V) aus Kohlenwasserstoffwachsen mit hydrophoben Ketten, die 20 bis 40 Kohlenstoffatome enthalten, und mit einem Schmelzpunkt von 46 bis 60 °C ausgewählt ist, das unpolare Lösungsmittel (VI) ein Kohlenwasserstofflösungsmittel mit niedrigem oder mittlerem Siedepunkt ist, der Inhibitor (IV) ein Hydrochinonderivat ist und das thixotrope Mittel hydrophiles oder hydrophobes Kieselpuder, Kieselgallerte oder Tonerde ist.

5. Pastensystem nach einem der Ansprüche 1 bis 4, **dadurch gekennzeichnet, dass** das Polyesterpolymer (II) ein monomerfreies Polyesterpolymer ist.

6. Pastensystem nach einem der Ansprüche 1 bis 5, **dadurch gekennzeichnet, dass** die Pasten (A), (B) und (C) zusätzlich Füllstoffe und/oder Mahlhilfsmittel und/oder Dispergiermittel und/oder Mittel zur Luftabscheidung und/oder Mittel zur Verstärkung der Thixotropie und/oder andere auf dem Fachgebiet bekannte Additive umfassen.

7. Verwendung eines Pastensystems nach einem der Ansprüche 1 bis 6 zur Herstellung getönter und/oder gefärbter Gelbeschichtungen und Deckbeschichtungen/Emaillen und oberflächenmodifizierter Deckbeschichtungen/Emaillen auf Basis ungesättigter Polyester, und zum Einstellen von Härtungseigenschaften von Gelbeschichtungen und Deckbeschichtungen/Emaillen auf Basis ungesättigter Polyester.

8. Verfahren zur Herstellung getönter und/oder gefärbter Gelbeschichtungen und Deckbeschichtungen/Emaillen auf Basis ungesättigter Polyester, **dadurch gekennzeichnet, dass** Farbpasten oder Farbstoffe und eine oder mehrere Komponenten, ausgewählt aus
einer Beschleunigerpaste (A), die durch Verdünnen von 10 bis 70 Gew.-% (eines) Beschleunigers/Beschleunigern (I) in 21 bis 88 Gew.-% eines Polyesterpolymers (II) oder, gegebenenfalls, in einem Gemisch von Polyesterpolymer (II) und polarem Lösungsmittel (III) in einem Verhältnis zwischen 4:1 und 1:4, und dann Mahlen von 1 bis 9 Gew.-% eines thixotropen Mittels in die Lösung hergestellt ist,
einer Inhibitorpaste (B), die durch Verdünnen von 1 bis 50 Gew.-% (eines) Inhibitors/Inhibitoren (IV) in 38 bis 95 Gew.-% eines polaren Lösungsmittels (III) oder, gegebenenfalls, in einem Gemisch eines polaren Lösungsmittels (III) und eines Polyesterpolymers (II) in einem Verhältnis zwischen 4:1 und 1:4, und dann Mahlen von 1 bis 12 Gew.-% eines thixotropen Mittels in die Lösung hergestellt ist, und
einer Paraffinpaste (C), die durch Schmelzen von 3 bis 12 Gew.-% eines Paraffinwachses (V) und Verdünnen desselben in 81 bis 94 Gew.-% eines unpolaren Lösungsmittels (VI), und dann Mahlen von 3 bis 7 Gew.-% eines thixotropen Mittels in die Lösung hergestellt ist,
zu einer Gelbeschichtung auf Basis ungesättigter Polyester automatisch oder manuell verteilt werden, und die Menge an Beschleunigerpaste (A) 0 bis 7 Gew.-% beträgt, die Menge an Inhibitorpaste (B) 0 bis 4 Gew.-% beträgt und die Menge an Paraffinpaste (C) 1,3 bis 5,3 Gew.-% beträgt.

9. Verfahren zur Herstellung von getönten und/oder gefärbten Gelbeschichtungen und Deckbeschichtungen/Emaillen auf Basis ungesättigter Polyester nach Anspruch 8, **dadurch gekennzeichnet, dass**
die Beschleunigerpaste (A) 40 bis 60 Gew.-% eines Beschleunigers oder eines Promotors (I) oder einer Kombination davon, 25 bis 50 Gew.-% eines Polyesterpolymers (II), das gegebenenfalls mit einem polaren Lösungsmittel (III) in einem Verhältnis zwischen 3:1 und 1:3 kombiniert ist, und 2 bis 8 Gew.-% eines thixotropen Mittels umfasst;
die Inhibitorpaste (B) 15 bis 40 Gew.-% eines Inhibitors (IV) oder einer Kombination davon, 55 bis 75 Gew.-% eines polaren Lösungsmittels (III), das gegebenenfalls mit einem Polyesterpolymer (II) in einem Verhältnis zwischen 3:1 und 1:3 kombiniert ist und 2 bis 10 Gew.-% eines thixotropen Mittels umfasst; und
die Paraffinpaste (C) 5 bis 10 Gew.-% eines Paraffinwachses (V), 84 bis 88 Gew.-% eines unpolaren Lösungsmittels (VI) und 4 bis 6 Gew.-% eines thixotropen Mittels umfasst.

10. Verfahren zur Herstellung von getönten und/oder gefärbten Gelbeschichtungen und Deckbeschichtungen/Emaillen auf Basis ungesättigter Polyester nach Anspruch 8 oder 9, **dadurch gekennzeichnet, dass** das Polyesterpolymer (II) auf ungesättigten und/oder gesättigten Disäuren basiert.

11. Verfahren zur Herstellung von getönten und/oder gefärbten Gelbeschichtungen und Deckbeschichtungen/Emaillen auf Basis ungesättigter Polyester nach einem der Ansprüche 8 bis 10, **dadurch gekennzeichnet, dass** der Beschleuniger oder Promotor (I) ein Metall, ein Metallsalz einer organischen Säure, ein Amin oder ein Amid ist, das Polyesterpolymer (II) ein ungesättigtes Polyesterpolymer niedriger Viskosität ist, das gegebenenfalls einen einwertigen Alkohol als endständige Gruppe aufweist, das polare Lösungsmittel (III) ein Glycol oder Glycolether oder Styrol oder Derivat davon oder Methacrylat oder Acrylat oder anderes Lösungsmittel, das zum Verdünnen von Gelbeschichtungen auf Basis ungesättigter Polyester verwendet wird, ist, das Paraffinwachs (V) aus Kohlenwasserstoffwachsen mit hydrophoben Ketten, die 20 bis 40 Kohlenstoffatome enthalten, und mit einem Schmelzpunkt von 46 bis 60 °C ausgewählt ist, das unpolare Lösungsmittel (VI) ein Kohlenwasserstofflösungsmittel mit niedrigem oder mittlerem Siedepunkt ist, der Inhibitor (IV) ein Hydrochinonderivat und das thixotrope Mittel hydrophiles oder hydrophobes Kieselpuder, Kieselgallerte oder Tonerde ist.

12. Verfahren zur Herstellung von getönten und/oder gefärbten Gelbeschichtungen und Deckbeschichtungen/Emaillen auf Basis ungesättigter Polyester nach einem der Ansprüche 8 bis 11, **dadurch gekennzeichnet, dass** das Polyesterpolymer (II) ein monomerfreies Polyesterpolymer ist.

13. Verfahren zur Herstellung von getönten und/oder gefärbten Gelbeschichtungen und Deckbeschichtungen/Emaillen auf Basis ungesättigter Polyester nach einem der Ansprüche 8 bis 12, **dadurch gekennzeichnet, dass** die Menge der Beschleunigerpaste (A) 0 bis 2 Gew.-% beträgt, die Menge der Inhibitorpaste (B) 0 bis 0,5 Gew.-% beträgt und die Menge der Paraffinpaste (C) 1,6 bis 3,2 Gew.-% beträgt.

14. Verfahren nach einem der Ansprüche 8 bis 13 zur Herstellung von Deckbeschichtungen/Emaillen, **dadurch gekennzeichnet, dass** die Paraffinpaste (C) automatisch zu Gelbeschichtungen auf Basis ungesättigter Polyester während des Tönens verteilt wird und oberflächenmodifizierte Deckbeschichtungen/Emaillen erhalten werden.

15. Verfahren zur Herstellung von getönten und/oder gefärbten Gelbeschichtungen und Deckbeschichtungen/Emaillen auf Basis ungesättigter Polyester nach einem der Ansprüche 8 bis 14, **dadurch gekennzeichnet, dass** die Pasten (A), (B) und (C) zusätzlich Füllstoffe und/oder Mahlhilfsmittel und/oder Dispergiermittel und/oder Mittel zur Luftabscheidung und/oder Mittel zur Verstärkung der Thixotropie und/oder andere auf dem Fachgebiet bekannte Additive umfassen.

16. Verfahren zur Herstellung von getönten und/oder gefärbten Gelbeschichtungen und Deckbeschichtungen/Emaillen auf Basis ungesättigter Polyester nach Anspruch 13, **dadurch gekennzeichnet, dass** die Menge der Beschleunigerpaste (A) 0,01 bis 1,6 Gew.-% beträgt und die Menge der Inhibitorpaste (B) 0,01 bis 0,3 Gew.-% beträgt.

17. Verfahren zur Herstellung von getönten und/oder gefärbten Gelbeschichtungen und Deckbeschichtungen/Emaillen auf Basis ungesättigter Polyester nach einem der Ansprüche 8 bis 16, **dadurch gekennzeichnet, dass** das Verteilen der Pasten (A), (B) und (C) automatisch gemäß vorbestimmten mathematischen Modellen, die in Tönungssoftware gespeichert sind, durchgeführt wird.

## Revendications

1. Système de pâte pour l'ajustement automatique des propriétés de durcissement de couches de gel et de couches de finition/émaux à base de poly(ester) insaturé, **caractérisé en ce que** le système de pâte comprend une pâte d'accélérateur (A), une pâte d'inhibiteur (B) et une pâte de paraffine (C), et
la pâte d'accélérateur (A) comprend 10 à 70 % en poids d'un accélérateur ou un promoteur (I) ou une combinaison de ceux-ci, 21 à 88 % en poids d'un polymère poly(ester) (II) qui est facultativement combiné avec un solvant polaire (III) en un rapport entre 4 : 1 et 1 : 4 et 1 à 9 % en poids d'un agent thixotrope ;
la pâte d'inhibiteur (B) comprend 1 à 50 % en poids d'un inhibiteur (IV) ou d'une combinaison de celui-ci, 38 à 95 % en poids d'un solvant polaire (III), qui est facultativement combiné avec un polymère poly(ester) (II) en un rapport entre 4 : 1 et 1 : 4, et 1 à 12 % en poids d'un agent thixotrope ; et
la pâte de paraffine (C) comprend 3 à 12 % en poids d'une cire de paraffine (V), 81 à 94 % en poids d'un solvant non polaire (VI) et 3 à 7 % en poids d'un agent thixotrope.

2. Système de pâte selon la revendication 1, **caractérisé en ce que**
la pâte d'accélérateur (A) comprend 40 à 60 % en poids d'un accélérateur ou un promoteur (I) ou une combinaison de ceux-ci, 25 à 50 % en poids d'un polymère poly(ester) (II) qui est facultativement combiné avec un solvant polaire (III) en un rapport entre 3 : 1 et 1 : 3 et 2 à 8 % en poids d'un agent thixotrope ;
la pâte d'inhibiteur (B) comprend 15 à 40 % en poids d'un inhibiteur (IV) ou une combinaison de celui-ci, 55 à 75 % en poids d'un solvant polaire (III), qui est facultativement combiné avec un polymère poly(ester) (II) en un rapport entre 3 : 1 et 1 : 3 et 2 à 10 % en poids d'un agent thixotrope ; et
la pâte de paraffine (C) comprend 5 à 10 % en poids d'une cire de paraffine (V), 84 à 88 % en poids d'un solvant non polaire (VI) et 4 à 6 % en poids d'un agent thixotrope.

3. Système de pâte selon la revendication 1 ou 2, **caractérisé en ce que** le polymère poly(ester) (II) est basé sur des diacides insaturés et/ou saturés.

4. Système de pâte selon l'une quelconque des revendications 1 à 3, **caractérisé en ce que** l'accélérateur ou promoteur (I) est un métal, un sel de métal d'un acide organique, une amine ou un amide, le polymère poly(ester) (II) est un polymère poly(ester) insaturé à faible viscosité, facultativement terminé par un alcool monohydrique, le solvant polaire (III) est un glycol ou glycol éther ou styrène ou son dérivé ou un méthacrylate ou acrylate ou un autre solvant utilisé pour la dilution de couches de gel à base de poly(ester) insaturé, la cire de paraffine (V) est choisie dans le groupe consistant en des cires hydrocarbonées avec des chaînes hydrophobes contenant 20 à 40 atomes de carbone et ayant un point de fusion de 46 à 60 °C, le solvant non polaire (VI) est un solvant hydrocarboné à ébullition faible ou moyenne, l'inhibiteur (IV) est un dérivé d'hydroquinone et l'agent thixotrope est de la silice fumée hydrophile ou hydrophobe, de la silice précipitée ou de l'argile.

5. Système de pâte selon l'une quelconque des revendications 1 à 4, **caractérisé en ce que** le polymère poly(ester) (II) est un polymère poly(ester) dépourvu de monomère.

6. Système de pâte selon l'une quelconque des revendications 1 à 5, **caractérisé en ce que** les pâtes (A), (B) et (C) comprennent en outre des charges et/ou des aides au broyage et/ou des aides à la dispersion et/ou des agents de libération d'air et/ou des amplificateurs de thixotropie et/ou d'autres additifs connus dans l'art.

7. Utilisation d'un système de pâte selon l'une quelconque des revendications 1 à 6, dans la fabrication de couches de gel teintées et/ou colorées et des couches de finition/émaux et des couches de finition/émaux modifiées en surface à base de poly(ester) insaturé, et pour ajuster les propriétés de durcissement des couches de gel et couches de finition/émaux à base de poly(ester) insaturé.

8. Procédé de fabrication de couches de gel et de couches de finition/émaux teintées et/ou colorées à base de poly(ester) insaturé, **caractérisé en ce que** les pâtes de couleur ou colorants et un ou plusieurs composants choisis dans le groupe consistant en
une pâte d'accélérateur (A), qui est fabriquée en diluant 10 à 70 % en poids d'un (d') accélérateur(s) (I) dans 21 à 88 % en poids d'un polymère poly(ester) (II) ou, facultativement, dans un mélange de polymère poly(ester) (II) et de solvant polaire (III) en un rapport entre 4 : 1 et 1 : 4, et puis 1 à 9 % en poids d'un agent thixotrope est broyé dans la solution,
une pâte d'inhibiteur (B), qui est fabriquée en diluant 1 à 50 % en poids d'un (d') inhibiteur(s) (IV) dans 38 à 95 % en poids d'un solvant polaire (III) ou, facultativement, dans un mélange de solvant polaire (III) et de polymère poly(ester) (II) en un rapport entre 4 : 1 et 1 : 4, et puis 1 à 12 % en poids d'un agent thixotrope est broyé dans la solution, et
une pâte de paraffine (C), qui est fabriquée en faisant fondre 3 à 12 % en poids d'une cire de paraffine (V) et en la diluant dans 81 à 94 % en poids d'un solvant non polaire (VI), et puis 3 à 7 % en poids d'un agent thixotrope est broyé dans la solution,
sont distribués automatiquement ou manuellement en une couche de gel à base de poly(ester) insaturé, et la quantité de la pâte d'accélérateur (A) est de 0 à 7 % en poids, la quantité de la pâte d'inhibiteur (B) est de 0 à 4 % en poids et la quantité de pâte de paraffine (C) est de 1,3 à 5,3 % en poids.

9. Procédé de fabrication de couches de gel et de couches de finition/émaux teintées et/ou colorées à base de poly(ester) insaturé selon la revendication 8, **caractérisé en ce que**
la pâte d'accélérateur (A) comprend 40 à 60 % en poids d'un accélérateur ou un promoteur (I) ou une combinaison de ceux-ci, 25 à 50 % en poids d'un polymère poly(ester) (II) qui est facultativement combiné avec un solvant polaire (III) en un rapport entre 3 : 1 et 1 : 3 et 2 à 8 % en poids d'un agent thixotrope ;
la pâte d'inhibiteur (B) comprend 15 à 40 % en poids d'un inhibiteur (IV) ou une combinaison de celui-ci, 55 à 75 % en poids d'un solvant polaire (III), qui est facultativement combiné avec un polymère poly(ester) (II) en un rapport entre 3 : 1 et 1 : 3 et 2 à 10 % en poids d'un agent thixotrope ; et
la pâte de paraffine (C) comprend 5 à 10 % en poids d'une cire de paraffine (V), 84 à 88 % en poids d'un solvant non polaire (VI) et 4 à 6 % en poids d'un agent thixotrope.

10. Procédé de fabrication de couches de gel et de couches de finition/émaux teintées et/ou colorées à base de poly(ester) insaturé selon la revendication 8 ou 9, **caractérisé en ce que** le polymère poly(ester) (II) est basé sur des diacides insaturés et/ou saturés.

11. Procédé de fabrication de couches de gel et de couches de finition/émaux teintées et/ou colorées à base de poly(ester) insaturé selon l'une quelconque des revendications 8 à 10, **caractérisé en ce que** l'accélérateur ou promoteur (I) est un métal, un sel de métal d'un acide organique, une amine ou un amide, le polymère poly(ester) (II) est un polymère poly(ester) insaturé à faible viscosité, facultativement terminé par un alcool monohydrique, le solvant polaire (III) est un glycol ou glycol éther ou styrène ou son dérivé ou un méthacrylate ou acrylate ou un autre solvant utilisé pour la dilution de couches de gel à base de poly(ester) insaturé, la cire de paraffine (V) est choisie dans le groupe consistant en des cires hydrocarbonées avec des chaînes hydrophobes contenant 20 à 40 atomes de carbone et ayant un point de fusion de 46 à 60°C, le solvant non polaire (VI) est un solvant hydrocarboné à ébullition faible ou moyenne, l'inhibiteur (IV) est un dérivé d'hydroquinone et l'agent thixotrope est de la silice fumée hydrophile ou hydrophobe, de la silice précipitée ou de l'argile.

12. Procédé de fabrication de couches de gel et de couches de finition/émaux teintées et/ou colorées à base de poly(ester) insaturé selon l'une quelconque des revendications 8 à 11, **caractérisé en ce que** le polymère poly(ester) (II) est un polymère poly(ester) dépourvu de monomère.

13. Procédé de fabrication de couches de gel et de couches de finition/émaux teintées et/ou colorées à base de poly(ester) insaturé selon l'une quelconque des revendications 8 à 12, **caractérisé en ce que** la quantité de la pâte d'accélérateur (A) est de 0 à 2 % en poids, la quantité de la pâte d'inhibiteur (B) est de 0 à 0,5 % en poids et la quantité de pâte de paraffine (C) est de 1,6 à 3,2 % en poids.

14. Procédé selon l'une quelconque des revendications 8 à 13, pour la fabrication de couches de finition/émaux, **caractérisé en ce que** la pâte de paraffine (C) est distribuée automatiquement à des couches de gel à base de poly(ester) insaturé pendant la teinture et des couches de finition/émaux modifiées en surface sont obtenues.

15. Procédé de fabrication de couches de gel et de couches de finition/émaux teintées et/ou colorées à base de poly(ester) insaturé selon l'une quelconque des revendications 8 à 14, **caractérisé en ce que** les pâtes (A), (B) et (C) comprennent en outre des charges et/ou des aides au broyage et/ou des aides à la dispersion et/ou des agents de libération d'air et/ou des amplificateurs de thixotropie et/ou d'autres additifs connus dans l'art.

16. Procédé de fabrication de couches de gel et de couches de finition/émaux teintées et/ou colorées à base de poly(ester) insaturé selon la revendication 13, **caractérisé en ce que** la quantité de la pâte d'accélérateur (A) est de 0,01 à 1,6 % en poids et la quantité de la pâte d'inhibiteur (B) est de 0,01 à 0,3 % en poids.

17. Procédé de fabrication de couches de gel et de couches de finition/émaux teintées et/ou colorées à base de poly(ester) insaturé selon l'une quelconque des revendications 8 à 16, **caractérisé en ce que** la distribution des pâtes (A), (B) et (C) est effectuée automatiquement selon des modèles mathématiques prédéterminés dans un logiciel de teinture.
